# EUROPEAN PATENT APPLICATION

(11) **EP 3 404 946 A1**
(43) Date of publication of application: **21.11.2018**
(21) Application number: 18171850.3
(22) Date of filing: 11.05.2018
(51) Int. Cl.: H04W 12/08, G06F 21/32, H04W 12/06, G06K 9/00, H04L 29/06

(54) **MOBILE DEVICE WITH CONTINUOUS USER AUTHENTICATION**

(30) Priority: 15.05.2017 US 201715595512
(71) Applicant: Otis Elevator Company, Farmington, Connecticut 06032 (US)
(72) Inventor: FINN, Alan M., East Hartford, CT Connecticut 06108 (US); HSU, Arthur, Farmington, CT Connecticut 06032 (US)
(74) Representative: Schmitt-Nilson Schraud Waibel Wohlfrom Patentanwälte Partnerschaft mbB

(57) **Abstract**

A method of operating a secure input/output system or a mobile device is provided. The method includes determining, from refresh rate analysis of facial imagery, whether a spoofing attack of the secure input/output system or the mobile device is underway and outputting information through an output device of the secure input/output system or the mobile device only upon determining that there is no spoofing attack currently underway.

## Description

The following description relates to secure input/output systems and mobile devices and, more particularly, to a secure input/output system or mobile device, such as a service tool, with continuous user authentication capability.

The need for user authentication is present in many fields and applications and can be satisfied by proof of one or more of what you know (e.g., a password, etc.), what you have (e.g., a token, etc.) and/or what you are (e.g., biometrics). In the latter category, facial recognition systems can be used and may be inexpensive, convenient and sufficiently accurate for many applications including those requiring continuous authentication. Facial recognition, in particular, involves a camera being aimed outwardly from a display screen with an authorized user or another user positioned within the camera's field of view (FoV). The camera then images the faces seen in the FoV and software is executed to perform facial recognition algorithms on those images.

While such facial recognition can be useful, problems exist. These include spoofing attacks that have been developed specifically to defeat facial recognition which has been updated over the years with defenses such as "liveness detection" and "motion consistency" defenses. In one recent case, however, a spoof has been developed whereby virtual reality is employed to simulate an authorized user's face in front of a camera. Such simulation can actually defeat the liveness detection and motion consistency defenses.

In view of the new spoofing attacks being developed to overcome the defenses noted above, alternative biometrics for user authentication have been developed as well. These include, for example, iris recognition. However, since these options typically require very high spatial resolution and potentially suffer at least some of the same types of vulnerabilities to spoofing attacks as facial recognition systems, the alternative biometric options may not be reliable substitutes for facial recognition. According to one aspect of the disclosure, a method of operating a secure input/output system or a mobile device is provided. The method includes determining, from refresh rate analysis of facial imagery, whether a spoofing attack of the secure input/output system or the mobile device is underway and outputting information through an output device of the secure input/output system or the mobile device only upon determining that there is no spoofing attack currently underway.

In addition to one or more of the features described above, or as an alternative, the determining includes performing facial imagery of a face positioned to view information displayed by an output device of the secure input/output system or the mobile device and determining whether the facial imagery indicates that the face is being displayed with a characteristic display device refresh rate.

In addition to one or more of the features described above, or as an alternative, the determining includes identifying an aliased refresh rate in the facial imagery.

In addition to one or more of the features described above, or as an alternative, the determining includes performing pixel registration and further image processing on the facial imagery.

In addition to one or more of the features described above, or as an alternative, the method further includes identifying a second face in a FoV of a camera along with the face and restricting operations of the output device accordingly.

According to another aspect of the disclosure, a secure input/output system or a mobile device includes an output device to display information to a user, a camera having a field of view (FoV) which encompasses a face positioned to view the information displayed by the output device and a processor. The processor causes the camera to perform facial imagery of the face, determines whether the facial imagery indicates that the face is being displayed within the FoV with a characteristic display device refresh rate and controls operations of the output device based on a determination result.

In addition to one or more of the features described above, or as an alternative, the secure input/output system or the mobile device further includes user input devices and a hand-held housing on which the output device, the camera and the user input devices are supportively disposed.

In addition to one or more of the features described above, or as an alternative, the information displayed by the output device includes proprietary information.

In addition to one or more of the features described above, or as an alternative, a sampling rate of the camera is at least one of different from display device refresh rates and variable.

In addition to one or more of the features described above, or as an alternative, the processor identifies an aliased refresh rate in determining whether the facial imagery indicates that the face is being displayed, determines that the face is being displayed based on the aliased refresh rate being identified and restricts operations of the output device accordingly.

In addition to one or more of the features described above, or as an alternative, the processor performs pixel registration and further image processing in determining whether the facial imagery indicates that the face of the user is being displayed, determines that the face is being displayed based on a result of the FFT and restricts operations of the output device accordingly.

In addition to one or more of the features described above, or as an alternative, the processor ignores non-facial features in determining whether the facial imagery indicates that the face of the user is being displayed.

In addition to one or more of the features described above, or as an alternative, the processor identifies a second face in the FoV and restricts operations of the output device accordingly.

In addition to one or more of the features described above, or as an alternative, the camera is provided as multiple cameras supportively disposed on the housing.

In addition to one or more of the features described above, or as an alternative, a method of operating a secure input/output system or a mobile device is provided. The method includes performing facial imagery of a face positioned to view information displayed by an output device, determining whether the facial imagery indicates that the face is being displayed with a characteristic display device refresh rate and controlling operations of the output device based on a result of the determining.

In addition to one or more of the features described above, or as an alternative, the information displayed by the output device includes proprietary information.

In addition to one or more of the features described above, or as an alternative, the performing of facial imagery includes at least one of setting a sampling rate of the camera to differ from display device refresh rates and varying a sampling rate of a camera.

In addition to one or more of the features described above, or as an alternative, the determining includes identifying an aliased refresh rate from pixel registration and further image processing.

In addition to one or more of the features described above, or as an alternative, the determining includes ignoring non-facial features.

In addition to one or more of the features described above, or as an alternative, the method further includes identifying a second face in a FoV of a camera along with the face and restricting operations of the output device accordingly.

These and other advantages and features will become more apparent from the following description taken in conjunction with the drawings.

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a perspective view of a secure input/output system or a mobile device in accordance with embodiments;
FIG. 2 is a view of a field of view (FoV) of a camera of the secure input/output system or the mobile device of FIG. 1;
FIG. 3 is a schematic diagram illustrating a processing system of the secure input/output system or the mobile device of FIG. 1;
FIG. 4 depicts a classic spoofing attack;
FIG. 5 depicts a spoofing attack that overcomes a "liveness" defense;
FIG. 6 depicts a spoofing attack that the secure input/output system or the mobile device of FIG. 1 is configured to defeat;
FIG. 7A illustrates a first stage of a pixel registration process in accordance with embodiments;
FIG. 7B illustrates a second stage of a pixel registration process in accordance with embodiments;
FIG. 8A illustrates a first stage of further image processing in accordance with embodiments;
FIG. 8B illustrates a second stage of further image processing in accordance with embodiments; and
FIG. 9 is a flow diagram illustrating a method of operating a secure input/output system or a mobile device in accordance with embodiments.

Secure input/output systems or mobile devices, such as service tools carried by repairmen, often include proprietary information and intellectual property that needs to be displayed and protected during the display thereof. This is especially true in the particular case of service tools of elevator repairmen who might board an elevator and use their service tool in the presence of elevator passengers who may or may not be authorized to view the proprietary information or even ride in the elevator.

Thus, as will be described below, a method and secure input/output system or a mobile device are provided by which a user of the secure input/output system or the mobile device is continuously ensured to be authorized to actually use the secure input/output system or the mobile device and to be the only such user. First, characteristic signatures of a display device which is needed for a spoofing attack are detected. Second, it is ensured that there is no other face or iris in the relevant field of view (FoV) along with the authorized user.

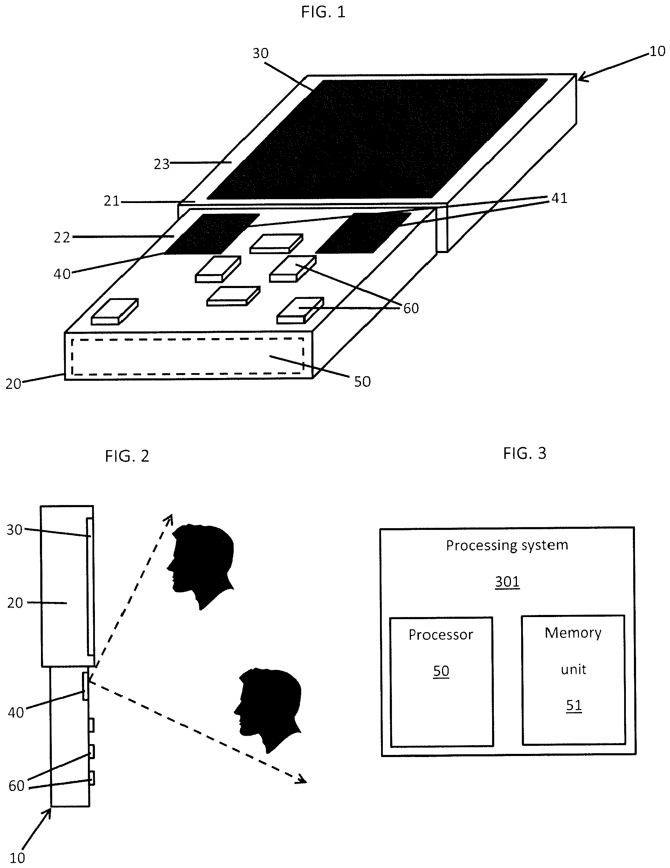

With reference to FIG. 1, a secure input/output system or a mobile device (hereinafter referred to as the "mobile device") 10 is provided. The mobile device 10 may be any tool that can be interacted with by an authorized person or, in a particular case, a hand-held device and may be provided as a portable computing device, a laptop, a tablet, a smartphone or a dedicated tool, such as a service tool. Thus, for the purposes of clarity and brevity, the following description will relate to the particular case of the mobile device 10 being provided either as a smartphone or as a hand-held service tool.

In the particular cases of the mobile device 10 being a smartphone or a hand-held service tool, the mobile device 10 may include a housing 20, an output device 30 which is supportively disposed on the housing 20, a camera 40 which is also supportively disposed on the housing 20 and a processor 50 that can be provided within the housing 20 or remote from the housing 20. The mobile device 10 may also include a power source (not shown), such as a battery or, more particularly, a rechargeable battery.

As shown in FIG. 1, the housing 20 can be formed of rigid or semi-rigid materials and can be sized to be hand held with a front face 21 having a user input section 22 and an output section 23. The output device 30 may be provided in the output section 23 as a screen, such as an LCD screen or some other suitable type of display screen, which can be configured and controllably operated to display information and, in particular, proprietary information to a user who is verified to be authorized to view such information and proprietary information. The mobile device 10 may also include user input devices 60, such as control and arrow buttons, a real, graphical or virtualized keyboard, a touchpad, etc., for controlling various operations of the mobile device 10 in the user input section 22.

The camera 40 may be provided as a single camera 41 or as multiple cameras 41 that are at least partially operable by the processor 50. In any case, with reference to FIG. 2, the camera 40 is configured to take and generate analog or digital images or video and has a FoV that is large enough and angled appropriately to encompass a face which is positioned to view the information displayed by the output device 30. Thus, the camera 40 is configured and disposed to take and generate analog or digital images or video of a face or of multiple faces which is or are positioned within the FoV.

In accordance with embodiments, where the camera 40 is taking and generating video, the camera 40 may be provided such that it has a sampling rate that is different from refresh rates that are commonly used with display devices (e.g., 30, 60 or 120 Hz). In accordance with alternative embodiments, the camera 40 may be provided with a variable sampling rate that can be selectively or automatically varied at various times and points.

With reference back to FIG. 1 and with additional reference to FIG. 3, the processor 50 may be provided within a processing system 301 along with a memory unit 51. The memory unit 51 may have executable instructions stored thereon, which, when executed, cause the processor 50 to operate as described herein. For example, the executable instructions may instruct the processor 50 to cause the camera 40 to perform facial imagery of the face positioned to view the information displayed by the output device 30, to continuously determine whether the performed facial imagery indicates that the face positioned to view the information displayed by the output device 30 is being displayed within the FoV of the camera 40 with a refresh rate that is characteristic of a display device and to controls operations of the output device 30 based on a result of the determination.

That is, in an event that the processor 50 determines at any time that the performed facial imagery indicates that the face positioned to view the information displayed by the output device 30 is being displayed within the FoV of the camera 40 with a refresh rate that is characteristic of a display device and thus recognizes that there is a potential spoofing attack underway, the processor 50 restricts operations of the output device 30 such that the output device 30 does not display proprietary information.

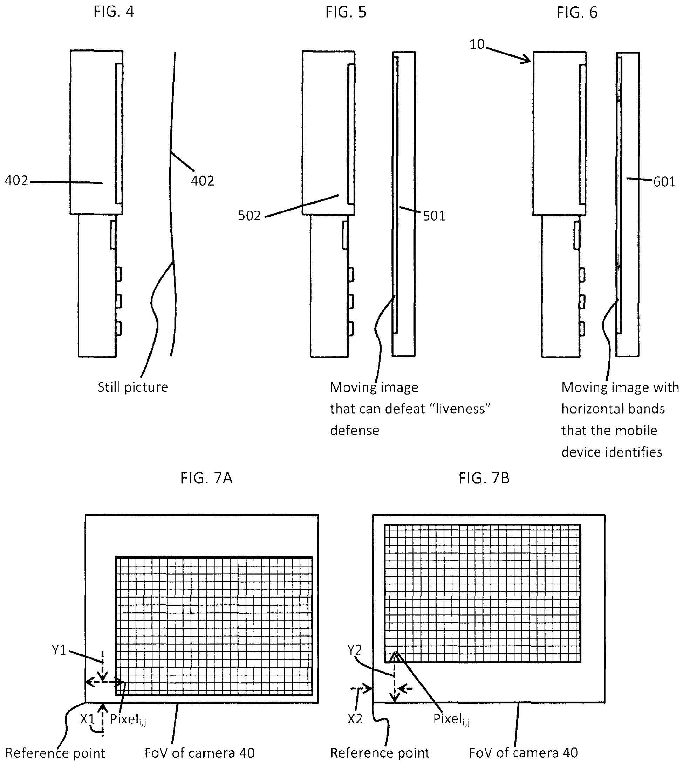

With reference to FIGS. 4, 5 and 6, one of the common characteristics of non-static spoofing systems is that an attacker uses a display device to portray a dynamic image of an authorized user. The use of dynamic imagery overcomes a "liveness" defense to the classic spoofing attack in which a non-moving picture 401 of an authorized user is displayed in front of a camera of a device 402 that uses facial recognition for user authentication (see FIG. 4). The "liveness" defense looks for normal movements of an image that would be associated with a live person which the picture cannot satisfy but the video displayed by device 501 in front of a camera of a device 502 can meet (see FIG. 5). In this case, since display devices typically operate with a characteristic refresh rate (e.g., 60Hz or 120Hz in order to simulate smooth motion) whereby the pixels of the display devices are updated faster than changes which are detectable to the human eye, the processor 50 of the mobile device 10 looks for evidence in the imagery taken and generated by the camera 40 of the face (i.e., the face which is positioned to view the information being displayed by the output device 30) being displayed by a display device 601 with a refresh rate that effectively serves as evidence of the presence of the display device 601 itself (see FIG. 6).

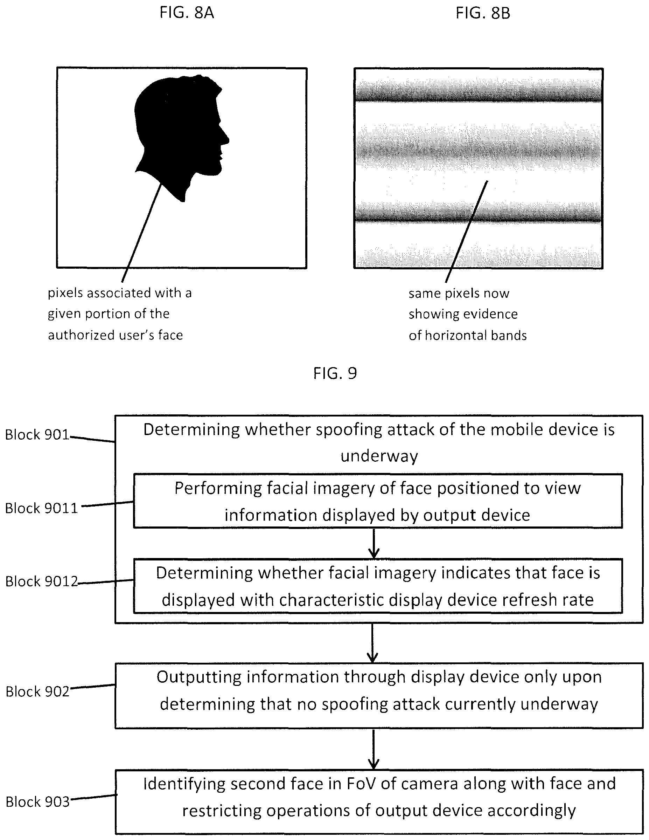

With continued reference to FIG. 6 and with additional reference to FIGS. 7A and 7B and to FIGS. 8A and 8B, the processor 50 identifies an aliased refresh rate of the display device 601 in determining whether the facial imagery indicates that the face (i.e., the face which is positioned to view the information being displayed by the output device 30) is being displayed by the display device 601. In accordance with embodiments, the processor 50 accomplishes this by performing pixel registration (see FIGS. 7A and 7B) and further image processing, such as a fast Fourier transform (FFT) (see FIGS. 8A and 8B).

For the pixel registration, it is to be understood that in the case of display device 601 being held in front of the mobile device 10 in order to display a moving image of an authorized user, the pixels associated with a given portion of the authorized user's face will move with the display device 601 once the "liveness" of the moving image being displayed is taken into account. Therefore, pixel_{i,j} of FIG. 7A can be matched to pixel_{i,j} of FIG. 7B even though pixel_{i,j} of FIG. 7B is located at a different position (X2, Y2) relative to a reference point of the FoV of the camera 40 from pixel_{i,j} of FIG. 7A (X1, Y1). Pixel registration thus permits a given set of pixels 701 in a reasonably large, spatially contiguous area of the FoV of the camera 40 to be reviewed from frame to frame even while the pixel itself is updated for the purpose of displaying a moving image and even while the display device 601 is moved relative to the mobile device 10.

The further image processing may include an inspection of the facial imagery once the pixel registration is complete in order to find evidence of the refresh rate of the display device 601. In accordance with embodiments, the further image processing by the processor 50 may include an operation of identifying the presence of horizontal bands in frame to frame imagery that result from beat frequency caused by or resulting from slightly different refresh and sampling rates or the use of FFT in the case of the display device 601 being an LCD display in which the horizontal bands will be less pronounced. Such horizontal band recognition may be executed by the processor 50 using a graphical recognition algorithm that is similar to facial recognition but designed for banding or other suitable algorithms. In accordance with still further embodiments, the further image processing by the processor 50 may include ignoring the presence of other display devices, fluorescent lights, etc. in the FoV of the camera 40 by way of executions of non-facial detection algorithms. Here, the processor 50 may again employ graphical recognition algorithms that allow the processor 50 to recognize features in the FoV of the camera 40 which are not faces, eyes or irises and thus can be ignored for the purposes of the further image processing.

In accordance with further embodiments and with reference back to FIG. 2, in an event the processor 50 identifies a second face in the FoV of the camera 40 from the imagery taken and generated by the camera 40 by, for example, executions of facial recognition algorithms or other similar algorithms, the processor 50 may restrict operations of the output device 30 accordingly. That is, in an event the processor 50 observes a person who appears to be surreptitiously looking at the output device 30 (e.g., perhaps by the processor 50 executing the facial recognition algorithm and identifying facial features of an individual whose eyes are trained on the mobile device 10 over the shoulder of an authorized user for an extended period of time), the processor 50 may prevent the output device 30 from displaying proprietary information.

Where the camera 40 is provided as multiple cameras 41, the multiple cameras 41 can be controlled by the processor 50 as described herein in order to provide for increased accuracy of the pixel registration and the further image processing and for providing image depth. In accordance with further or alternative embodiments, the multiple cameras 41 may be provided for additional or different image processing capabilities. For example, the multiple cameras 41 may be operable at a same or different sampling rate frequency (i.e., to insure that there is some difference between a sampling rate of at least one of the multiple cameras 41 and the display device 601) and/or off-phase from one another at a same or different sampling rate. Where the multiple cameras 41 are operated at a same sampling rate but off-phase from one another, the multiple cameras 41 may take and generate facial imagery that nearly instantly serves as evidence of display device 601 if the "first" camera 41 images a pixel that is properly colored for the moving image and the "second" camera 41 images that same pixel as being within a horizontal band.

With reference to FIG. 9, a method of operating a mobile device, such as the mobile device 10 described herein, is provided. As shown in FIG. 9, the method includes continuously determining whether a spoofing attack of the mobile device is underway (block 901) and outputting information through an output device of the mobile device only upon determining that there is no spoofing attack currently underway (block 902). The determining of block 901 may include performing facial imagery of a face positioned to view information displayed by an output device of the mobile device (block 9011) and determining whether the facial imagery indicates that the face is being displayed with a characteristic display device refresh rate as described above (block 9012). The method may further include identifying a second face in a FoV of a camera along with the face and restricting operations of the output device accordingly (block 903).

In accordance with further embodiments, the continuous determination of block 901 and the identifying of block 903 may be repeated multiple times over a predefined period of time or during various operations of the mobile device 10 in accordance with a predefined schedule or an event. For example, the continuous determination of block 901 may be repeated at regular intervals or when a new user's face appears in the FoV of the camera 40. Similarly, the identifying of block 903 may be executed at regular intervals when a second face appears in the FoV of the camera 40.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A method of operating a secure input/output system or a mobile device, the method comprising:
determining, from refresh rate analysis of facial imagery, whether a spoofing attack of the secure input/output system or the mobile device is underway; and
outputting information through an output device of the secure input/output system or the mobile device only upon determining that there is no spoofing attack currently underway.

2. The method according to claim 1, wherein the determining comprises:
performing facial imagery of a face positioned to view information displayed by an output device of the secure input/output system or the mobile device; and
determining whether the facial imagery indicates that the face is being displayed with a characteristic display device refresh rate.

3. The method according to claim 2, wherein the determining comprises identifying an aliased refresh rate in the facial imagery; and/or performing pixel registration and further image processing on the facial imagery.

4. The method according to claim 2 or 3, further comprising identifying a second face in a FoV of a camera along with the face and restricting operations of the output device accordingly.

5. A secure input/output system or a mobile device, comprising:
an output device disposed to display information to a user;
a camera having a field of view (FoV) which encompasses a face positioned to view the information displayed by the output device; and
a processor which causes the camera to perform facial imagery of the face, determines whether the facial imagery indicates that the face is being displayed within the FoV with a characteristic display device refresh rate and controls operations of the output device based on a determination result.

6. The secure input/output system or the mobile device according to claim 5, further comprising:
user input device; and
a hand-held housing on which the output device, the camera and the user input devices are supportively disposed.

7. The secure input/output system or the mobile device according to claim 5 or 6, wherein the information displayed by the output device comprises proprietary information; and/or wherein a sampling rate of the camera is at least one of different from display device refresh rates and variable.

8. The secure input/output system or the mobile device according to any of claims 5 to 7, wherein the processor identifies an aliased refresh rate in determining whether the facial imagery indicates that the face is being displayed, determines that the face is being displayed based on the aliased refresh rate being identified and restricts operations of the output device accordingly and/or wherein the processor performs pixel registration and further image processing in determining whether the facial imagery indicates that the face of the user is being displayed, determines that the face is being displayed based on a result of the FFT and restricts operations of the output device accordingly.

9. The secure input/output system or the mobile device according to any of claims 5 to 8, wherein the processor ignores non-facial features in determining whether the facial imagery indicates that the face of the user is being displayed; and/or wherein the processor identifies a second face in the FoV and restricts operations of the output device accordingly.

10. The secure input/output system or the mobile device according to any of claims 5 to 9, wherein the camera is provided as multiple cameras supportively disposed on the housing.

11. A method of operating a secure input/output system or a mobile device, the method comprising:
performing facial imagery of a face positioned to view information displayed by an output device;
determining whether the facial imagery indicates that the face is being displayed with a characteristic display device refresh rate; and
controlling operations of the output device based on a result of the determining.

12. The method according to claim 11, wherein the information displayed by the output device comprises proprietary information.

13. The method according to claim 11 or 12, wherein the performing of facial imagery comprises at least one of setting a sampling rate of the camera to differ from display device refresh rates and varying a sampling rate of a camera.

14. The method according to any of claims 11 to 13, wherein the determining comprises identifying an aliased refresh rate from pixel registration and further image processing, and/or ignoring non-facial features.

15. The method according to any of claims 11 to 14, further comprising identifying a second face in a FoV of a camera along with the face and restricting operations of the output device accordingly.
